(19) Europäisches Patentamt / European Patent Office / Office européen des brevets

(11) **EP 2 668 510 B1**

(12) **FASCICULE DE BREVET EUROPEEN**

(45) Date de publication et mention
de la délivrance du brevet:
**22.04.2015 Bulletin 2015/17**

(21) Numéro de dépôt: **12708554.6**

(22) Date de dépôt: **23.01.2012**

(51) Int Cl.:
*G01P 15/097* (2006.01)  *G01K 5/48* (2006.01)
*G01K 7/32* (2006.01)  *G01L 1/10* (2006.01)
*G01L 1/16* (2006.01)  *G01L 9/00* (2006.01)
*G01L 19/04* (2006.01)  *H03H 9/15* (2006.01)
*G01C 19/5656* (2012.01)  *G01H 13/00* (2006.01)
*G01K 3/10* (2006.01)  *G01K 11/26* (2006.01)

(86) Numéro de dépôt international:
**PCT/FR2012/000030**

(87) Numéro de publication internationale:
**WO 2012/101350 (02.08.2012 Gazette 2012/31)**

(54) **DISPOSITIF DE MESURE DE LA TEMPÉRATURE D'UNE POUTRE VIBRANTE ET APPLICATION À L'AMÉLIORATION DE LA PRÉCISION DE MESURE D'UN CAPTEUR À POUTRE VIBRANTE**

VORRICHTUNG ZUM MESSEN DER TEMPERATUR EINES VIBRIERENDEN BALKENS UND DEREN VERWENDUNG ZUR VERBESSERUNG DER MESSGENAUIGKEIT EINES SENSORS MIT VIBRIERENDEM BALKEN

DEVICE FOR MEASURING THE TEMPERATURE OF A VIBRATING BEAM AND APPLICATION TO THE IMPROVEMENT OF THE PRECISION OF MEASUREMENT OF A VIBRATING-BEAM SENSOR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **24.01.2011 FR 1100196**

(43) Date de publication de la demande:
**04.12.2013 Bulletin 2013/49**

(73) Titulaire: **Office National d'Etudes et de Recherches Aérospatiales (ONERA)
92320 Châtillon (FR)**

(72) Inventeurs:
• **LE TRAON, Olivier**
F-91430 Vauhallan (FR)
• **CHARTIER, Claude**
F-91300 Massy (FR)
• **GAUDINEAU, Vincent**
F-91120 Palaiseau (FR)
• **GUERARD, Jean**
F-91260 Juvisy (FR)
• **JANIAUD, Denis**
F-91940 Les Ulis (FR)
• **LEVY, Raphaël**
F-75014 Paris (FR)

(74) Mandataire: **de Kernier, Gabriel
Cabinet Netter
Conseils en Propriété Industrielle
36, avenue Hoche
75008 Paris (FR)**

(56) Documents cités:
**US-A- 4 879 914    US-A- 5 315 874**

• **AZEVEDO R G ET AL: "Dual-mode temperature compensation for a comb-driven MEMS resonant strain gauge", SENSORS AND ACTUATORS A, ELSEVIER SEQUOIA S.A., LAUSANNE, CH, vol. 144, no. 2, 15 juin 2008 (2008-06-15) , pages 374-380, XP022664318, ISSN: 0924-4247, DOI: 10.1016/J.SNA.2008.02.007 [extrait le 2008-02-23]**
• **NORLING B L: "Precision gravity measurement utilizing Accelerex vibrating beam accelerometer technology", 19900320; 19900320 - 19900323, 20 mars 1990 (1990-03-20), pages 509-515, XP010001172, cité dans la demande**

**EP 2 668 510 B1**

**Description**

Le domaine technique de l'invention est celui des capteurs à poutre vibrante, qui exploitent la sensibilité de la fréquence de résonance d'une poutre vibrante, à une force exercée suivant son axe longitudinal, le phénomène mécanique mis en jeu étant analogue à celui intervenant par exemple dans l'accord d'une corde de guitare. La grandeur d'entrée à mesurer par le capteur est par exemple une force, une pression ou une accélération.

Le problème technique à résoudre est d'éviter la dégradation de la précision de mesure d'un capteur à poutre vibrante lorsque le capteur est soumis à des conditions sévères d'environnement thermique.

L'état de l'art le plus proche regroupe les trois approches suivantes:

La première approche enseigne de monter en parallèle deux poutres vibrantes mais avec des axes sensibles de sens opposés, puis à considérer la différence de leurs fréquences de vibration de flexion de manière à annuler l'effet, sur lesdites fréquences, de la dilatations thermique naturelle des poutres sous l'effet de la température.

La deuxième approche enseigne de disposer une poutre vibrante additionnelle à proximité du capteur, destinée à fournir une information de température sous forme fréquentielle, ladite information étant destinée à compenser, par modèle, des effets de la température sur le capteur.

La troisième approche enseigne de faire travailler le capteur avec, comme élément sensible, non pas une mais deux poutres vibrantes formant un diapason pouvant vibrer simultanément en mode de flexion à une première fréquence et en mode de torsion à une deuxième fréquence. Chacune des deux fréquences étant sensible à la grandeur d'entrée à mesurer et à la température, après étalonnage du dispositif, l'observation des deux fréquences permet d'estimer la grandeur d'entrée et la température.

Ces enseignements de l'état de l'art sont décrits en détail ci-après afin de bien mettre en lumière les inconvénients auxquels l'invention offre une solution.

On considère pour fixer les idées le cas de capteurs accélérométriques à poutre vibrante (en anglais Vibrating Beam Accelerometers, dits VBA), qui sera pris pour décrire ces deux approches.

Un accéléromètre à poutre vibrante comporte une poutre dont une extrémité est solidaire d'une masse d'épreuve et l'autre extrémité est solidaire d'une partie fixe, des moyens de mise en vibration de flexion de la poutre, et une boucle électronique oscillatrice qui permet de maintenir la vibration de flexion de la poutre en mode de résonance. On appelle axe sensible de l'accéléromètre la direction suivant laquelle une accélération crée, par l'intermédiaire de la masse d'épreuve, une force axiale d'extension ou de compression sur la poutre vibrante, ce qui modifie sa fréquence de résonance mécanique. La grandeur de sortie de l'accéléromètre est ainsi une fréquence dont les variations sont représentatives de l'accélération à mesurer. La masse d'épreuve est généralement reliée à la partie fixe par des articulations destinées à assurer la tenue de la masse d'épreuve pour les directions d'accélération autres que l'axe sensible.

Afin que la vibration de la poutre présente un bon coefficient de qualité, et ainsi que la résolution de mesure de l'accéléromètre soit satisfaisante, la structure mécanique de l'accéléromètre est conditionnée sous vide dans un boîtier étanche.

Comme pour beaucoup de capteurs, les variations de température sont source d'une limitation des performances des accéléromètres à poutre vibrante. Dans le cas des accéléromètres à poutre vibrante, les variations de température provoquent des variations de la fréquence de la poutre pouvant être faussement interprétées comme provenant d'une accélération.

Les mécanismes d'action de la température sont de natures diverses, suivant que la variation de température est lente ou rapide.

Par variation lente de température, il faut entendre que la vitesse de variation de la température est suffisamment faible pour que la température soit pratiquement uniforme dans toute la structure de l'accéléromètre.

Lors d'une variation lente de température, seuls deux phénomènes interviennent au premier chef.

Le premier phénomène est la modification naturelle des paramètres dimensionnels et mécaniques de la poutre, qui provoque intrinsèquement une variation de sa fréquence de résonance. Le matériau constituant la poutre joue un rôle déterminant, et il est connu par exemple dans l'industrie horlogère que le quartz permet de réduire notablement l'influence de la température sur la fréquence de résonance d'une poutre vibrant en flexion.

Le second phénomène est présent lorsque la réalisation de l'accéléromètre fait appel à plusieurs matériaux, par exemple lorsque l'accéléromètre comporte une poutre en quartz assemblée sur une masse d'épreuve et une partie fixe métalliques. Les coefficients de dilatation thermique de ces matériaux ne pouvant être strictement égaux, la dilatation différentielle provoque sur la poutre une force axiale d'extension ou de compression qui modifie sa fréquence de résonance par le même mécanisme que l'accélération, c'est-à-dire malencontreusement avec la même efficacité. C'est, pourquoi il est avantageux que la structure de l'accéléromètre soit réalisée dans le même matériau. Ainsi, il est connu par exemple de réaliser des structures d'accéléromètre monolithiques en quartz, ce qui permet de supprimer ce second phénomène et ainsi de limiter l'influence de variations lentes de température au premier phénomène, c'est-à-dire aux variations naturelles de la fréquence de résonance de la poutre.

Cependant, pour les applications qui nécessitent une grande précision de mesure, par exemple la navigation inertielle, les amplitudes de ces variations naturelles de la fréquence de la poutre sont encore trop importantes, et ne peuvent pas être suffisamment compensées par un modèle basé sur la connaissance de la température obtenue au moyen d'un capteur classique de température placé à proximité de l'accéléromètre.

La première approche décrite ci-dessous met en oeuvre, à cette fin, deux structures d'accéléromètre sensiblement identiques, très proches l'une de l'autre, généralement contenues dans le même boîtier étanche, et fonctionnant en mode différentiel, c'est-à-dire disposées de sorte que leurs axes sensibles soient de sens opposés, ainsi qu'il est décrit dans le **brevet** US 5 962 786 au nom du demandeur. De cette façon, les deux structures « voient » des accélérations respectivement $\Gamma$ et $-\Gamma$ de sens opposés et subissent par contre quasiment la même variation de température $(T-T_0)$. Leurs fréquences F et F' respectives s'écrivent, de façon simplifiée :

$$F \approx K_0 + K_1.\Gamma + K_2.\Gamma^2 + \alpha_1.(T-T_0) + \alpha_2.(T-T_0)^2$$

$$F' \approx K_0 + K_1.(-\Gamma) + K_2.(-\Gamma)^2 + \alpha_1.(T-T_0) + \alpha_2.(T-T_0)^2$$

Où, pour chacune des structures, $K_0$ est la fréquence en l'absence d'accélération et à la température de référence To, $K_1$ et $K_2$ sont les coefficients de sensibilité au premier et au deuxième ordre de l'accélération, et $\alpha_1$ et $\alpha_2$ les coefficients de sensibilité au premier et au deuxième ordre de la température.

La grandeur de sortie S d'un tel accéléromètre différentiel est la différence des deux fréquences F et F' :

$$S \approx F-F' \approx 2.K_1.\Gamma$$

Ainsi, le fonctionnement en mode différentiel permet d'une part de linéariser la réponse du capteur à l'accélération, et d'autre part d'éliminer quasiment l'influence de la température. Dans la pratique, compte tenu des imperfections de réalisation, la sensibilité à la température de la sortie S n'est pas nulle mais d'environ deux ordres de grandeur plus faible que celle de chacune des deux fréquences F et F', ce qui est généralement suffisant.

Il vient d'être expliqué, dans le cas de variations lentes de température, des mécanismes d'action de la température sur la précision de l'accéléromètre, et des façons d'y remédier.

Il va maintenant être abordé le cas des variations rapides de température, sur la base de l'accéléromètre différentiel AD objet du brevet précité et montré à la **figure 1.**

**L'inconvénient de cette première approche** est qu'elle ne peut convenir à résoudre le problème de la dégradation de la précision de mesure du capteur lorsque le capteur est soumis à des variations rapides de température, ainsi qu'il est montré dans ce qui suit.

Ledit accéléromètre différentiel AD est constitué de deux structures d'accéléromètre TAe1 et TAe2 monolithiques en quartz et sensiblement identiques entre elles. Chaque structure d'accéléromètre a la forme générale d'un disque et a son axe sensible à peu près perpendiculaire au plan du disque, les axes sensibles des deux structures étant de sens opposés. Généralement, le diamètre du disque est inférieur à 10 mm et son épaisseur est inférieure à 1 mm. Pour chaque structure, la poutre vibrante (3e1 ; 3e2) est solidaire à une extrémité d'une première partie massive (2e1 ; 2e2) faisant office de masse d'épreuve et à l'autre extrémité d'une seconde partie massive (4e1 ; 4e2) faisant office de partie fixe vis-à-vis du fonctionnement de la structure soumise à une accélération. Généralement, les dimensions de section de la poutre vibrante sont inférieures à 100 $\mu$m. Lesdites parties massives ont chacune la forme générale d'un U. Le cadre (5e1 ; 5e2) entourant les deux parties massives est destiné à préserver la qualité de la vibration de flexion de la poutre, mais ne joue pratiquement aucun rôle vis-à-vis du fonctionnement de la structure soumise à une accélération.

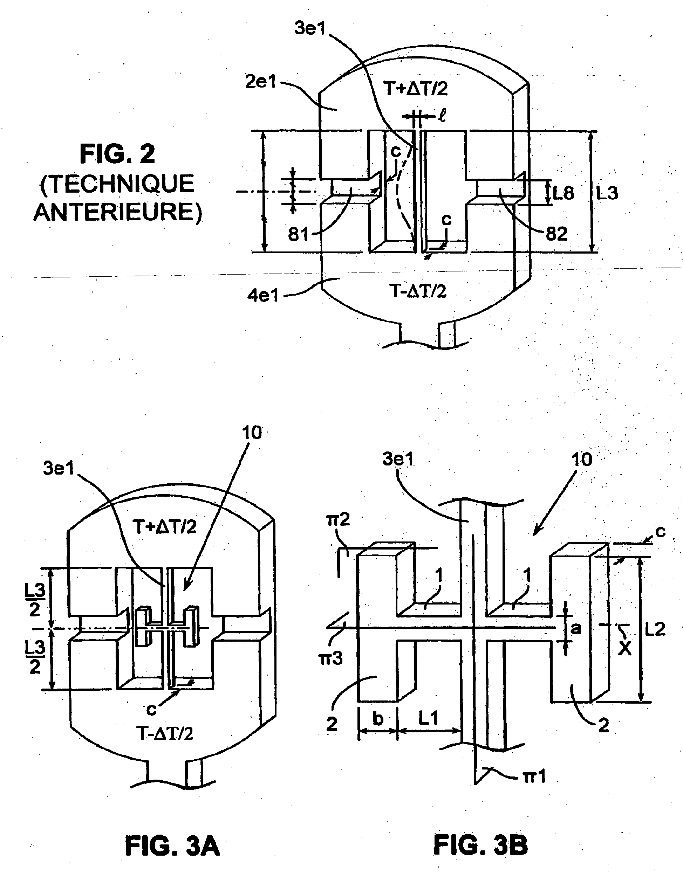

Cet accéléromètre différentiel connu de la technique antérieure fait partie de la catégorie des microsystèmes électromécaniques (en anglais MEMS) et présente de bonnes performances tant que les variations de température sont relativement lentes. Par contre, pour des variations relativement rapides, par exemple 10°C/mn, la précision de l'accéléromètre est sensiblement dégradée. Cela tient principalement au fait qu'une variation rapide de température induit généralement d'une part un gradient spatial de température à l'intérieur du boîtier étanche, plus précisément un écart de température entre les deux poutres vibrantes, et d'autre part un gradient spatial de température au sein de chaque structure d'accéléromètre ainsi qu'il est expliqué dans ce qui suit en référence à la figure 2.

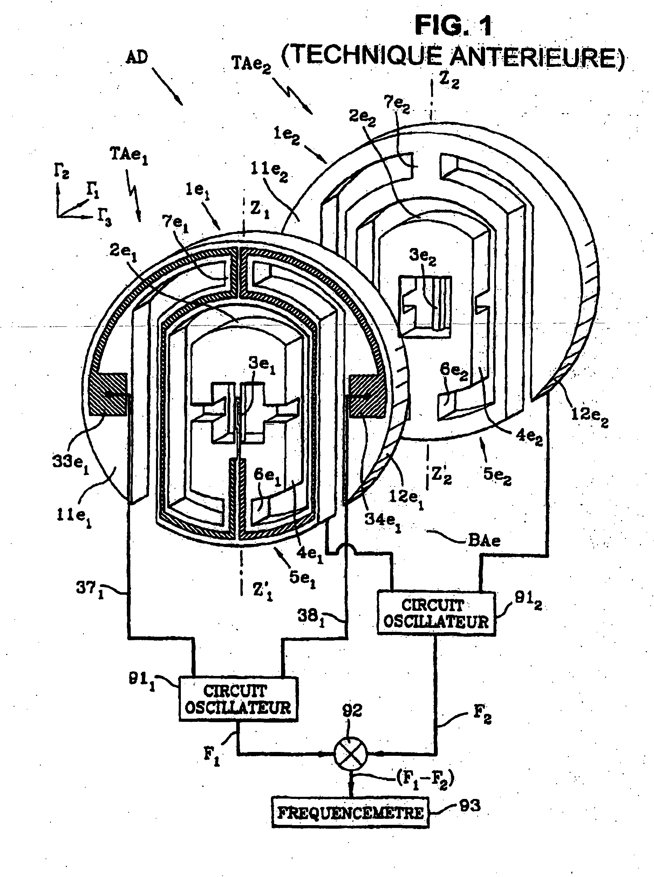

La **figure 2** montre une vue partielle de l'une des deux structures (TAe1) de l'accéléromètre AD de la figure 1, limitée principalement à la poutre vibrante 3e1, aux parties massives 2e1 et 4e1, et aux articulations 81 et 82. On notera, ainsi qu'expliqué dans le brevet précité, que la structure peut être réalisée en une seule étape d'usinage chimique en gravant simultanément les deux faces d'un wafer (plaquette) en quartz jusqu'à une profondeur correspondant à l'épaisseur c de la poutre et des articulations. Cette simplicité de réalisation permet d'obtenir un faible coût de fabrication, d'autant plus que plusieurs structures peuvent être usinées simultanément dans un même wafer, par exemple une vingtaine de structures dans un wafer de dimensions de surface 38,1 mm x 38,1 mm.

La vibration de flexion de la poutre s'effectue parallèlement au plan de la structure, ainsi que représenté en pointillé de façon exagérément agrandie sur la figure 2. Cela permet que la fréquence de vibration présente une dispersion relativement faible sur un ensemble de réalisations, car la fréquence de la vibration de flexion de la poutre dépend beaucoup de sa longueur (L3) et de sa dimension de section prise dans le plan de vibration, en l'occurrence sa largeur $\ell$, ces deux dimensions étant obtenues par des procédés photolithographiques très précis, alors que son autre dimension de section, en l'occurrence son épaisseur c obtenue par l'arrêt de l'usinage chimique, est moins facile à maîtriser.

Lorsque la structure subit une variation de température, la conduction de la chaleur de la partie massive 4e1 à la partie massive 2e1 s'effectue uniquement par la poutre vibrante et les articulations, c'est-à-dire par des parties amincies qui se comportent comme un frein vis-à-vis de la conduction de la chaleur. Dans de telles conditions, il est connu que la température de chacune des parties massives est sensiblement uniforme et que l'écart $\Delta T$ entre les températures des deux parties massives est proportionnel à la vitesse de variation de la température.

Pour chacune des parties amincies, de forme parallélépipédique, les équations classiques de la conduction de la chaleur montrent que la température varie de façon sensiblement linéaire entre ses extrémités solidaires des parties massives. La poutre vibrante 3e1 et les articulations 81 et 82 ont donc la même température moyenne T; T étant la température au niveau du milieu de leur longueur. Ainsi, la température de la poutre vibrante et des articulations varie linéairement entre $T-\Delta T/2$ et $T+\Delta T/2$.

On appellera L8 la longueur des articulations 81 et 82, et on notera que la position des articulations est à l'aplomb du milieu de la longueur L3 de la poutre vibrante. Dans ces conditions, la dimension de longueur de chacune des branches parallèles des parties massives 2e1 et 4e1 en forme de U vaut (L3-L8)/2.

A l'aide d'un modèle à une dimension parallèle à l'axe longitudinal de la poutre vibrante, on peut maintenant exprimer l'impact du gradient spatial de température sur les dilatations des deux chemins de matière joignant chacun les deux extrémités de la poutre vibrante, le premier chemin passant par ladite poutre et le second chemin passant par les articulations. En désignant par « a » le coefficient de dilatation thermique du matériau :

Dilatation du premier chemin :

$$a.T.L3$$

Dilatation du second chemin :

$$a.(T-\Delta T/2).(L3-L8)/2 + a.T.L8 + a.(T+\Delta T/2)(L3-L8)/2 = a.T.L3$$

On voit, après simplification dans la deuxième équation, que les dilatations des deux chemins sont théoriquement identiques et qu'ainsi il n'y a théoriquement pas de force axiale d'extension ou de compression exercée sur la poutre vibrante. Il n'en serait pas de même si les articulations n'étaient pas situées à l'aplomb du milieu de la longueur L3 de la poutre vibrante, car les dilatations des deux chemins de matière ne seraient pas équilibrées et il en résulterait une force axiale d'extension ou de compression responsable d'une variation de la fréquence de la poutre vibrante, ladite variation de fréquence étant proportionnelle à $\Delta T$ et donc proportionnelle à la vitesse de variation de température $\partial T/\partial t$.

Dans la pratique, il est difficile de bien obtenir cet équilibrage qui est très exigeant sur les tolérances de réalisation. De ce fait, chacune des deux structures constituant l'accéléromètre différentiel présente une sensibilité à $\partial T/\partial t$. Lorsque les deux structures sont réalisées dans un même lot, typiquement par usinage chimique collectif dans un même wafer en quartz, leurs sensibilités à $\partial T/\partial t$ peuvent être relativement voisines, ce qui pourrait laisser espérer une réduction de la sensibilité de la sortie S différentielle. Dans la réalité, cette réduction ne peut être obtenue que si les deux poutres vibrantes « voient » précisément la même vitesse de variation de température $\partial T/\partial t$, ce qui n'est généralement pas le cas. Ainsi, les fréquences F et F' délivrées par les deux structures s'écrivent, de façon simplifiée:

$$F \approx K_0 + K_1.\Gamma + K_2.\Gamma^2 + \alpha_1.(T-T_0) + \alpha_2.(T-T_0)^2 + \lambda.\partial T/\partial t$$

$$F' \approx K_0 + K_1.(-\Gamma) + K_2.(-\Gamma)^2 + \alpha_1.(T'-T_0) + \alpha_2.(T'-T_0)^2 + \lambda'.\partial T'/\partial t$$

Où T et T' sont les températures moyennes des deux poutres vibrantes, et $\lambda$ et $\lambda$' sont les coefficients de sensibilité des deux fréquences à la vitesse de variation de la température.

Le lecteur aura noté que, en présence de variations rapides de température, la fréquence de chacune des poutres vibrantes est liée à la température via deux phénomènes très différents : le premier fait intervenir la température moyenne instantanée de la poutre et s'apparente au phénomène de la modification naturelle des paramètres dimensionnels et mécaniques de la poutre dans le cas précédemment expliqué de variations lentes de température, et le second phénomène fait intervenir la vitesse de variation de la température qui induit une force axiale d'extension ou de compression sur la poutre. De plus, les températures moyennes des deux poutres ne sont pas identiques, de même que leurs vitesses de variation.

Dans ces conditions, il est dans la pratique difficile de tirer parti du fonctionnement en mode différentiel, sauf à réaliser un boîtier suffisamment performant et des assemblages suffisamment identiques des deux structures dans le boîtier pour obtenir avec une identité suffisante que $T \approx T'$ et $\partial T/\delta t \approx \delta T'/\delta t$. Mais un tel boîtier et de tels assemblages conduiraient à un coût de fabrication excessif en comparaison du faible coût de réalisation des structures en quartz.

La deuxième approche est décrite dans l'article intitulé « Précision gravity measurement utilizing Accelerex vibrating beam accelerometer technology » de Brian L. Norling (IEEE PLANS 1990) dans lequel il est montré un élément vibrant additionnel (une poutre en quartz vibrant en flexion), solidaire de la paroi interne du boîtier étanché, et destiné uniquement à fournir une information de température sous forme fréquentielle. Ladite information de température est utilisée pour compenser, par modèle, des effets de la température sur le signal de sortie également fréquentiel de l'accéléromètre à poutre vibrante.

Cette compensation est très efficace pour des variations très lentes de température, ainsi qu'il est indiqué dans l'article qui préconise de protéger l'accéléromètre des régimes transitoires de température.

**L'inconvénient de cette deuxième approche** est que, de même que pour la première approche, elle ne permet pas de résoudre le problème posé par des variations rapides de température. Dans le cas de la deuxième approche, les variations rapides de température induisent un gradient spatial de température relativement important à l'intérieur du boîtier étanche et en particulier un écart de température entre l'élément vibrant additionnel et la poutre vibrante de la structure d'accéléromètre. De ce fait, l'indication de température fournie par l'élément vibrant additionnel n'est pas suffisamment représentative de la température de la poutre vibrante de la structure d'accéléromètre.

La troisième approche est décrite dans l'article intitulé **"Dual-mode temperature compensation for a comb-driven MEMS resonant strain gauge"** de Robert G. Azevedo (Sensors and Actuators A: Physical 2008) dans lequel il est montré un élément sensible de capteur, ledit élément sensible comportant un unique résonateur constitué d'un diapason à deux poutres sensiblement identiques (en anglais double-ended tuning fork, dit DETF). Le diapason peut être vu comme se substituant à la poutre unique 3e1 de la première approche illustrée à la figure 2.

Ledit élément sensible comporte de plus deux parties massives sensiblement identiques, de taille plus importante que celle du diapason et disposées de part et d'autre du diapason respectivement. Chaque partie massive est fixée à une poutre par une portion souple au voisinage du milieu de la longueur de la poutre, et son rôle est celui d'un actionneur capacitif à peignes inter digités (en anglais comb drives) permettant une grande efficacité de l'actionnement.

Le dispositif est apte à vibrer selon deux modes particuliers. Pour le premier mode particulier, les deux poutres vibrent en torsion en opposition de phase entre elles (mode A à 86,1 kHz), et pour le second mode particulier, les deux poutres vibrent en flexion en opposition de phase entre elles (mode D à 218 kHz). Pour chacun des deux modes, les deux parties massives jouent principalement un rôle d'inertie (inertie en rotation pour le premier mode et inertie en translation pour le second mode). De ce fait, la zone de fixation de chaque partie massive sur la poutre vibrante correspond à un ventre de vibration, plus précisément un ventre de vibration en torsion pour le premier mode et un ventre de vibration en flexion pour le second mode.

Les deux modes sont sensibles chacun à la grandeur d'entrée à mesurer (par exemple une force ou une accélération) et à la température, l'important étant que les coefficients de ces sensibilités ne soient pas dans le même rapport pour les deux modes, ce qui permet, en observant les variations de leurs fréquences, de discerner la grandeur d'entrée et la température, par exemple en résolvant un système de deux équations à deux inconnues.

Cette troisième approche est très efficace pour des variations très lentes de température.

**L'inconvénient de cette troisième approche** est que, de même que pour les première et deuxième approches, elle ne permet pas de résoudre le problème posé par des variations rapides de température. Dans le cas de la troisième approche, les deux modes soumis à une variation rapide de température verraient leurs fréquences varier en fonction de trois paramètres : la grandeur d'entrée à mesurer, la température T et la vitesse de variation de la température $\delta T/\delta t$, de la même façon qu'expliqué antérieurement pour la première approche. Il ne serait donc plus possible, en observant les variations des fréquences des deux modes, de discerner ces trois paramètres, puisque cela équivaudrait à vouloir résoudre un système de deux équations à trois inconnues.

Il pourrait paraître intéressant de s'inspirer néanmoins de cette troisième approche en tentant de faire intervenir un autre mode de vibration du dispositif, qui ne soit pas sensible aux forces axiales d'extension ou de compression appliquées au diapason. Ainsi cet autre mode de vibration ne serait sensible ni à la grandeur d'entrée à mesurer, ni à la vitesse de variation de la température $\delta T/\delta t$ comme expliqué antérieurement, mais serait seulement sensible à la température T. Il serait alors possible, en mesurant la fréquence de cet autre mode de vibration de connaître T et, au moyen de deux mesures successives de ladite fréquence, de déterminer une "dérivée partielle discrète" quasiment égale à $\delta T/\delta t$. La connaissance de ces deux paramètres, associée à la mesure de la fréquence par exemple du mode D qui dépend de la grandeur d'entrée, de T et de $\delta T/\delta t$, permettrait de déterminer la grandeur d'entrée.

Malheureusement, la conformation du dispositif selon la troisième approche ne permet pas qu'il existe un tel autre mode de vibration, ainsi qu'il est possible de l'appréhender dans l'article au vu des illustrations montrant huit modes de vibration du dispositif. En effet, la dissymétrie engendrée par la fixation de chaque partie massive d'un seul côté de la poutre est responsable du fait que la zone de ladite fixation est un ventre de translation ou de rotation de la poutre, quel que soit le mode de vibration du dispositif. De ce fait, la fréquence du mode de vibration est sensible aux forces axiales d'extension ou de compression appliquées au diapason, c'est-à-dire sensible à la grandeur d'entrée à mesurer et à $\delta T/\delta t$.

Le document US 4 879 944 A décrit un transducteur de force attaché entre deux structures comprenant un corps unitaire formé à partir d'un substrat cristallin de quartz. Le corps unitaire comprend un capteur de température à diapason. Le corps unitaire comprend deux éléments de montage pour monter le transducteur de force aux structures, deux éléments capteurs de force, chacun ayant des première et deuxième extrémités, une ligne s'étendant de la deuxième extrémité à la première extrémité de chaque élément capteur de force définissant un axe pour l'élément capteur de force, chaque élément capteur de force étant sensible à une force exercée dans toute direction le long de son axe, les éléments capteurs de force étant orientés avec leurs axes parallèles et alignés l'un avec l'autre ; et des moyens de couplage pour interconnecter les éléments de montage et les éléments capteurs de force de telle sorte que le premier élément capteur de force voit sa première extrémité connectée au deuxième élément de montage et sa deuxième extrémité connectée au premier élément de montage, et de telle sorte que le deuxième élément capteur de force voit sa première extrémité connectée au premier élément de montage et sa deuxième extrémité connectée au deuxième élément de montage. Une force exercée sur le transducteur de force par les structures parallèlement aux axes se traduit par une force de compression sur l'un des éléments capteurs de force et une force de traction sur l'autre élément capteur de force.

Le document US 5 315 874 décrit un capteur de température à diapason formé directement dans une structure capteur. Le capteur de température comprend des éléments résonateurs parallèles à l'axe et attachés à une seule extrémité à la structure capteur. Les éléments résonateurs comprennent des électrodes. En détectant la variation de la fréquence de vibration des éléments résonateurs, la température de la structure capteur peut être déterminée avec précision pour corriger l'accélération détectée, par les effets de température.

**L'invention** a notamment pour but de surmonter les inconvénients des approches antérieures en proposant un dispositif peu coûteux fournissant une mesure très précise de la température de la poutre vibrante, ce qui permet de compenser efficacement, par modèle, la sensibilité, à la température et à sa vitesse de variation, de toute structure de capteur à poutre vibrante.

A cette fin, le dispositif de mesure de la température de la poutre, vibrant selon un mode de flexion, d'un capteur à poutre vibrante, comprenant un élément additionnel vibrant selon un autre mode et dont la fréquence de résonance en fonction de la température est connue, ladite fréquence de résonance étant sensiblement différente de celle de la poutre, est **caractérisé** en ce que ledit élément est un résonateur vibrant en torsion en mode de résonance et présentant un noeud de vibration en torsion, ledit noeud étant sa zone de fixation au voisinage du milieu de la longueur de la poutre vibrante, ladite fixation permettant les transferts thermiques entre le résonateur et la poutre, ce grâce à quoi la fréquence du résonateur et les variations de cette fréquence sont représentatives respectivement de la température moyenne T de la poutre et des variations de cette température T.

La tenue du résonateur au niveau d'un noeud de sa vibration en torsion permet que sa fréquence soit peu sensible à une force axiale d'extension ou de compression induite sur la poutre par grandeur d'entrée que doit mesurer le capteur, c'est-à-dire peu sensible à ladite grandeur d'entrée. Par contre, la vibration en torsion du résonateur est très sensible à la température, en l'occurrence à la température du milieu de la poutre, donc à la température moyenne de la poutre.

De préférence, la fréquence du résonateur vibrant en torsion est nettement différente de celle de la poutre vibrant en flexion, afin que les deux vibrations punissent cohabiter sans pratiquement se gêner l'une l'autre.

Selon un deuxième mode particulier de réalisation, le dispositif de l'invention est caractérisé en ce que le résonateur a la forme générale d'un H dont les deux branches parallèles sont deux parties massives sensiblement identiques disposées parallèlement à l'axe longitudinal de la poutre et de part et d'autre de la poutre, et dont la branche commune est constituée par deux portions sensiblement identiques solidaires de la poutre et aptes à se déformer en torsion.

Selon un troisième mode particulier de réalisation, le résonateur et la poutre forment une structure monolithique plane d'épaisseur uniforme, afin de conserver la possibilité de réaliser la structure de capteur à poutre vibrante en une seule étape d'usinage chimique, ce qui est favorable à la réalisation d'un capteur de type MEMS et permet d'obtenir un faible coût de fabrication.

Selon un quatrième mode particulier de réalisation, le dispositif de l'invention selon l'un des modes de réalisation précédents est caractérisé en ce que le résonateur est équipé de moyens de mise en vibration reliés à une boucle électronique oscillatrice permettant de maintenir la vibration de torsion du résonateur en mode de résonance.

Selon un cinquième mode particulier de réalisation, le dispositif de l'invention selon le quatrième mode de réalisation est caractérisé en ce que le résonateur et la poutre sont réalisés en cristal piézoélectrique, par exemple du quartz, et que les moyens de mise en vibration du résonateur sont sous la forme d'électrodes supportées par les portions du résonateur pilotées en torsion.

Selon un sixième mode particulier de réalisation, le dispositif de l'invention selon le cinquième mode de réalisation est caractérisé en ce que, dans le cas où les moyens de mise en vibration de la poutre sont sous la forme d'électrodes supportées par la poutre et reliées à une autre boucle électronique oscillatrice permettant de maintenir la vibration de flexion de la poutre en mode de résonance, les électrodes du résonateur sont électriquement indépendantes des électrodes de la poutre, ce qui permet que les boucles électroniques oscillatrices du résonateur et de la poutre travaillent indépendamment l'une de l'autre.

Selon un septième mode particulier de réalisation, le dispositif de l'invention selon le cinquième mode de réalisation est caractérisé en ce que, dans le cas où les moyens de mise en vibration de la poutre sont sous la forme d'électrodes supportées par la poutre et reliées à une autre boucle électronique oscillatrice permettant de maintenir la vibration de flexion de la poutre en mode de résonance, les électrodes du résonateur et de la poutre sont électriquement reliées entre elles, ce qui permet d'exciter la poutre sur toute sa longueur.

Selon un huitième mode particulier de réalisation, le dispositif de l'invention selon l'un des modes de réalisation précédents est caractérisé en ce qu'il est appliqué à améliorer la précision de mesure d'un capteur à poutre vibrante, en compensant, par modèle, les effets de la température sur la fréquence de la poutre vibrante.

Afin que le résonateur puisse permettre d'améliorer notablement la précision de mesure du capteur lors de variations rapides de température, on peut utiliser pour chaque structure de capteur un modèle de compensation basé non seulement sur la température, moyenne de la poutre mais également sur la vitesse de variation de cette température.

Selon un neuvième mode particulier de réalisation, le dispositif de l'invention selon le huitième mode de réalisation est caractérisé en ce que ledit capteur à poutre vibrante est un capteur de type MEMS.

L'invention concerne aussi, sous un autre aspect, un procédé de mise en oeuvre d'un dispositif de mesure de la température de la poutre vibrant en flexion d'un capteur à poutre vibrante, comprenant les étapes suivantes:

- Etape E1 : positionner un élément vibrant fonctionnant en mode de résonance grâce à un circuit électronique oscillant, dont la fréquence de résonance en fonction de la température est connue, de manière à ce que sa température soit représentative de la température moyenne T de la poutre vibrante ;

- Etape E2 : mesurer la fréquence $F_R$ de vibration de l'élément vibrant ; et

- Etape E3 : estimer la température moyenne T de la poutre vibrante, à partir de la mesure de la fréquence $F_R$ de vibration dudit élément vibrant ;

et caractérisé en ce que :

- Le positionnement dudit élément vibrant, qui vibre en torsion à une fréquence de résonance sensiblement différente de celle de la poutre et présente un noeud de vibration en torsion, est réalisé de manière à ce que ledit élément soit fixé, au niveau dudit noeud, directement sur la poutre, au voisinage du milieu de sa longueur, ladite fixation permettant les transferts thermiques entre l'élément vibrant et ladite poutre, ce grâce à quoi la température dudit élément et les variations même rapides de cette température, sont très sensiblement égales respectivement à la température moyenne T de ladite poutre et aux variations même rapides de cette température T ;
- ledit procédé comprend en outre les étapes suivantes :

  ◦ Etape E4 : estimer, à partir d'au moins deux mesures successives de la fréquence $F_R$ de vibration en torsion de l'élément vibrant, la variation dans le temps de ladite fréquence $F_R$ ;
  ◦ Etape E5 estimer la variation dans le temps de la température moyenne de la poutre vibrante, à partir de l'estimation de la variation dans le temps de ladite fréquence $F_R$.

Selon un deuxième mode de mise en oeuvre du dispositif de l'invention, le procédé peut comprendre en outre les étapes suivantes:

- Etape E0 : mesurer la fréquence F de la poutre vibrante;

EP 2 668 510 B1

■ Etape E6 : estimer la grandeur d'entrée à mesurer par le capteur en compensant, par modèle, les effets de la température et de sa variation sur le fonctionnement dudit capteur, de manière à obtenir une estimation plus précise de cette grandeur d'entrée, ladite compensation étant réalisée à partir d'une part des estimations de la température moyenne T de la poutre vibrante, de l'estimation de sa variation dans le temps, de la mesure de la fréquence F de vibration de la poutre, et d'autre part d'un modèle exprimant ladite fréquence F en fonction de ladite grandeur d'entrée, de la température T et de la variation dans le temps de T.

Selon un troisième mode de mise en oeuvre du dispositif de l'invention, le procédé selon le deuxième mode de mise en oeuvre est caractérisé en ce que la mesure de la fréquence $F_R$ de l'élément vibrant (étape E2) est effectuée simultanément avec celle de la fréquence F de la poutre (étape E0).

Selon un quatrième mode de mise en oeuvre du dispositif de l'invention, le procédé selon le deuxième ou le troisième mode de mise en oeuvre est caractérisé en ce que, dans le cas où ledit capteur à poutre vibrante est un capteur différentiel comportant deux poutres vibrantes munies chacune d'un dispositif de mesure de la température selon l'invention, ledit procédé est utilisé pour compenser les effets de la température sur la fréquence de chacune des poutres.

Les caractéristiques et avantages de l'invention apparaîtront plus clairement à la lecture de la description détaillée et des figures qui s'y rapportent dans lesquelles :

-    la figure 1 montre un capteur différentiel mesurant l'accélération selon la technique antérieure et déjà commenté ;
-    la figure 2 est une vue partielle de l'une des deux structures dudit capteur différentiel selon la technique antérieure et déjà commentée ;
-    la figure 3A est une vue analogue à la figure 2 à laquelle on a ajouté sur la poutre, le résonateur d'un dispositif de mesure de température selon l'invention ;
-    la figure 3B est une vue agrandie partielle de la figure 3A montrant plus précisément ledit résonateur ;
-    la figure 4A montre des déformations exagérément agrandies de la poutre vibrant en flexion ;
-    la figure 4B montre des déformations exagérément agrandies du résonateur vibrant en torsion;
-    les figures 5A et 5B montrent chacune des moyens de mise en vibration de flexion de la poutre et de mise en vibration de torsion du résonateur ; et
-    la figure 6 illustre le procédé de mise en oeuvre d'un dispositif selon l'invention.

On se réfère d'abord à la **figure 3A** qui montre une vue analogue à celle de la figure 2 à laquelle on a ajouté sur la poutre 3e1 le résonateur 10 d'un dispositif de mesure de température selon l'invention. La **figure 3B** est une vue agrandie partielle de la figure 3A. Le résonateur 10 a la forme générale d'un H dont les deux branches parallèles sont deux parties massives, 2, parallélépipédiques, sensiblement identiques, de longueur L2 et de largeur b, disposées parallèlement à l'axe longitudinal de la poutre et de part et d'autre de la poutre, et dont la branche commune est constituée principalement par deux portions, 1, parallélépipédiques, sensiblement identiques, de longueur L1 et de largeur a, solidaires de la poutre au voisinage du milieu de sa longueur L3. Les deux portions 1 sont aptes à se déformer en torsion autour de leur axe central longitudinal X perpendiculaire à l'axe longitudinal de la poutre.

Selon les représentations illustrées, l'une des deux grandes faces du résonateur est coplanaire à la face de la poutre tournée vers l'extérieur de la structure du capteur, et l'autre grande face du résonateur est coplanaire à la face de la poutre tournée vers l'intérieur. Le résonateur 10 et la poutre 3e1 forment ainsi une structure monolithique plane d'épaisseur uniforme c, ce qui permet de conserver la possibilité de réaliser la structure du capteur en une seule étape d'usinage chimique, ce qui est favorable à la réalisation d'un capteur de type MEMS. Par rapport à la technique antérieure illustrée aux figures 1 et 2, la seule différence concernant la réalisation, réside dans la géométrie du masque photolithographique correspondant à la face du wafer où affleure la poutre, ledit masque photolithographique incluant le motif de face du résonateur. Par ailleurs, la mise en oeuvre de l'usinage chimique est inchangée.

Selon les représentations illustrées, ladite structure monolithique plane d'épaisseur uniforme c présente trois plans de symétrie $\pi1$, $\pi2$, $\pi3$ orthogonaux, et donc un centre de symétrie. Concernant les structures réalisées dans la présente invention, l'usinage chimique ne permet pas une maîtrise rigoureuse des formes des différents éléments constitutifs. L'homme de l'art comprendra que cette imprécision doit être prise en compte dans l'interprétation de certains termes descriptifs, comme par exemple les symétries de la structure ou les dimensions des éléments.

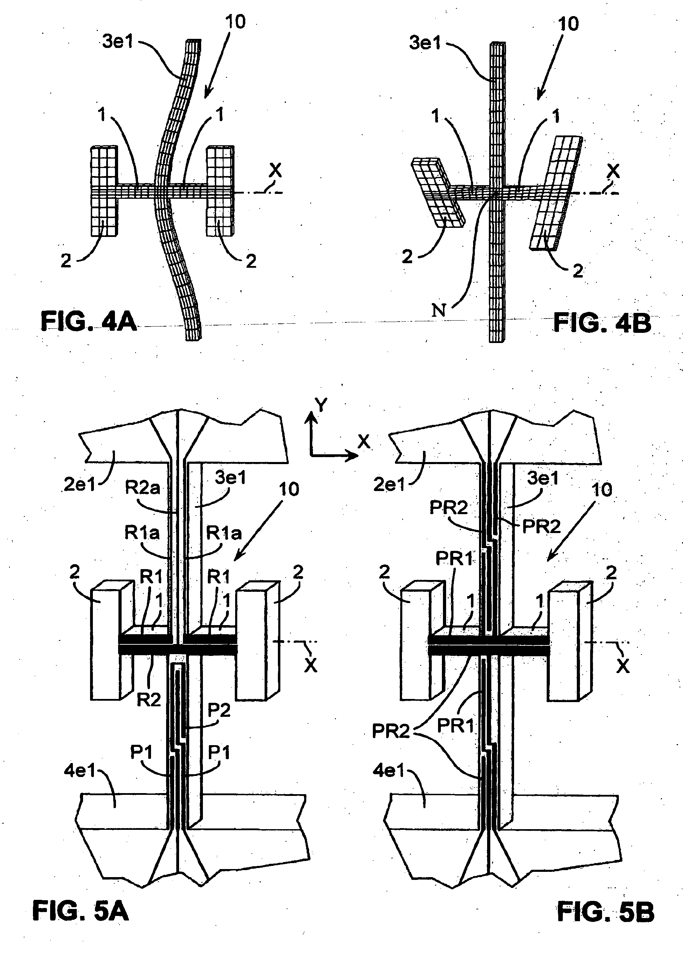

Il va maintenant être expliqué, en référence aux figures 4A et 4B, les deux modes de vibrations mécaniques intervenant simultanément dans le fonctionnement d'un capteur à poutre vibrante équipé du résonateur d'un dispositif selon l'invention. Il est important de noter que chacun des deux modes de vibrations travaille à sa fréquence de résonance, et que les fréquences de résonance des deux modes sont nettement différentes l'une de l'autre afin que les deux vibrations puissent cohabiter sans pratiquement se gêner l'une l'autre

La **figure 4A** montre, pour le premier mode, des déformations exagérément agrandies de la poutre 3e1 vibrant en flexion en mode de résonance, lorsque le résonateur 10 ne vibre pas en torsion. On voit que le résonateur 10 se comporte comme une équipage mobile quasiment non déformé qui subit une translation alternative parallèlement à l'axe longitudinal X des portions 1 et dont l'amplitude est celle du ventre de la déformation de la poutre. Ce premier mode doit être vu comme se substituant à la vibration de la poutre 3e1 de la technique antérieure illustrée à la figure 2, car la grandeur d'entrée à mesurer, en l'occurrence une accélération, agit sur la fréquence de résonance du premier mode suivant le même principe que celui évoqué dans le préambule. Dans le cas d'un capteur accélérométrique, ce premier mode est appelé « mode accélérométrique ».

Par rapport à ladite technique antérieure, la présence du résonateur 10 modifie la fréquence de résonance de vibration de la poutre et modifie également la sensibilité de cette fréquence à la force axiale d'extension ou de compression induite sur la poutre par la grandeur d'entrée à mesurer. Mais les ordres de grandeur de ces paramètres ne sont pas changés et il est possible, en modifiant les dimensions de la poutre, de se rapprocher des valeurs initiales. Ces modifications peuvent être conduites par exemple au moyen de simulations analytiques ou de simulations numériques basées sur la méthode des éléments finis.

La **figure 4B** montre, pour le second mode, des déformations exagérément agrandies du résonateur 10 vibrant en torsion en mode de résonance, lorsque la poutre 3e1 ne travaille pas en flexion. Plus précisément, les deux portions 1 travaillent en torsion autour de leur axe longitudinal X et les deux parties massives 2, quasiment non déformées, subissent des rotations alternatives autour de l'axe X en apposition de phase entre elles. De ce fait, les couples exercés par les deux portions 1 sur la poutre 3e1 s'équilibrent entre eux dans la zone où le résonateur est solidaire de la poutre, et ainsi le résonateur 10 présente un noeud N de vibration en torsion situé dans ladite zone.

La tenue du résonateur au niveau d'un noeud de sa vibration en torsion permet que sa fréquence de résonance soit peu sensible à une force axiale d'extension ou de compression induite sur la poutre par la grandeur d'entrée à mesurer, c'est-à-dire peu sensible à ladite grandeur d'entrée. Par contre, la vibration en torsion du résonateur est très sensible à sa température, en l'occurrence à la température du milieu de la poutre, donc à la température moyenne de la poutre. Ce second mode est appelé « mode thermométrique ».

Comme déjà dit précédemment, le premier et lé second modes interviennent parallèlement dans le fonctionnement d'un capteur à poutre vibrante équipé du résonateur d'un dispositif selon l'invention. Autrement dit, les vibrations des deux modes se superposent, chacun des modes vibrant à sa fréquence de résonance. Afin que lesdites vibrations soient quasiment indépendantes l'une de l'autre et ainsi que leurs fonctions respectivement, mesure de la grandeur d'entrée du capteur et mesure thermométrique, soient bien dissociées, il est important que les fréquences de résonance des deux modes soient nettement différentes. Cela permet qu'il n'y ait pratiquement pas de couplage mécanique entre les deux vibrations malgré une maîtrise imparfaite de l'usinage de la poutre et du résonateur. A titre d'exemple, la fréquence du premier mode vaut environ 60 kHz et celle du second mode environ 150 kHz.

Le résonateur et la poutre sont équipés de moyens de mise en vibrations, par exemple sous la forme d'électrodes métalliques adhérentes, ainsi qu'il est pratiqué dans la technique antérieure montrée sur la figure 1.

En particulier, le résonateur est équipé de moyens de mise en vibration reliés à une boucle électronique oscillatrice permettant de maintenir la vibration de torsion du résonateur en mode de résonance.

Le résonateur et la poutre sont réalisés en cristal piézoélectrique, par exemple du quartz, et les moyens de mise en vibration du résonateur sont sous la forme de d'électrodes supportées par les portions 1 du résonateur.

Les figures 5A et 5B montrent deux exemples de réalisation d'électrodes conformes à l'invention, pour lesquels les électrodes sont disposées sur les faces, tournées vers l'extérieur de la structure du capteur, du résonateur et de la poutre. Ainsi, il est possible, à l'instar de ladite technique antérieure, de réaliser à faible coût les électrodes en gravant la couche métallique préalablement utilisée comme masque pour l'usinage chimique de la structure du capteur.

Pour le premier exemple de réalisation illustré à la **figure 5A**, les électrodes du résonateur 10 sont indépendantes des électrodes de la poutre 3e1. Les électrodes R1 et R2 du résonateur sont sous la forme de rubans s'étendant sur les portions 1 parallèlement à leur axe longitudinal X qui est également l'axe cristallographique électrique X du quartz dans la réalisation illustrée, l'axe cristallographique mécanique Y étant orienté parallèlement à l'axe longitudinal de la poutre. Les électrodes R1 et R2 sont aptes à créer dans les portions 1, au voisinage de la face supportant les électrodes, un champ électrique dont la composante $E_Y$ parallèle à l'axe cristallographique mécanique Y est couplée par effet piézoélectrique à la contrainte mécanique de cisaillement $T_{XY}$ intervenant de façon prépondérante dans la torsion des portions 1. Ainsi, les électrodes R1 et R2 sont des moyens efficaces de mise en vibration du second mode montré à la figure 4B. Les électrodes R1 et R2. sont reliées à des plages de connexions électriques (non représentées) au moyen de rubans de raccordement rectilignes respectivement R1a et R2a passant par la moitié de longueur de poutre solidaire de la masse d'épreuve 2e1.

Toujours en se référant à la figure 5A, les électrodes P1 et P2 de la poutre 3e1 sont supportées par l'autre moitié de longueur de poutre et sont du type dit « à trois pistes », connu de l'homme du métier, qui permet de générer simultanément les champs électriques $+E_X$ et $-E_X$ aux voisinages des fibres longitudinales respectivement tendues et comprimées de la poutre travaillant en flexion. On notera que la conformation des électrodes P1 et P2 permet que lesdits champs électriques $+E_X$ et $-E_X$ changent de signe sensiblement au quart de la longueur de la poutre, afin de correspondre à l'inversion de la courbure de la poutre visible sur la figure 4A. Les électrodes P1 et P2 sont reliées à des plages de connexions électriques (non représentées) différentes de celles des électrodes R1 et R2. Ainsi, les électrodes P1 et P2 de la poutre 3e1 sont électriquement indépendantes des électrodes R1 et R2 du résonateur 10.

De plus, les électrodes P1 et P2 de la poutre 3e1 ne sont pas aptes à exciter la vibration du résonateur 10, et les électrodes R1 et R2 du résonateur 10 ne sont pas aptes à exciter la déformation en flexion de la poutre 3e1. Concernant les rubans de raccordement R1a et R2a des électrodes R1 et R2 supportés par une moitié de longueur de poutre et qui pourraient être vus comme des électrodes du type « à trois pistes », leur conformation rectiligne les rend quasiment inaptes à exciter la déformation en flexion de la poutre car cette conformation ne correspond pas à l'inversion de la courbure de la poutre au quart de sa longueur. Ainsi, les électrodes P1 et P2 sont sélectives de la déformation en flexion de la poutre, c'est-à-dire sélectives du premier mode de vibration illustré à la figure 4A, et les électrodes R1 et R2 du résonateur sont sélectives du second mode de vibration illustré à la figure 4B.

Dans ces conditions, il n'y a pas de difficulté particulière à faire fonctionner une première boucle électronique oscillatrice reliée aux électrodes P1 et P2, et indépendamment une seconde boucle électronique oscillatrice reliée aux électrodes R1 et R2, les fréquences des signaux circulant dans lesdites boucles étant représentatives d'informations respectivement de la grandeur d'entrée mesurée par le capteur et de la température. Ceci permet que les boucles électroniques oscillatrices du résonateur et de la poutre travaillent indépendamment l'une de l'autre.

En contrepartie de cette facilité de mise en oeuvre, les électrodes de la poutre ne sont disposées que sur une moitié de sa longueur, ce qui ne permet pas d'atteindre le couplage piézoélectrique maximal entre la vibration mécanique du premier mode et la boucle électronique oscillatrice associée. Il s'ensuit que le premier mode présente, en vibration de résonance, une résistance électrique équivalente relativement élevée, ce qui peut dans certains cas être préjudiciable à la résolution de mesure du capteur. Il est alors possible de recourir au second exemple de réalisation illustré à la figure 5B.

Pour le second exemple de réalisation illustré à la **figure 5B,** les électrodes du résonateur 10 ne sont pas indépendantes des électrodes de la poutre 3e1. Plus précisément, les électrodes du résonateur et de la poutre sont électriquement reliées de façon intime, ce qui justifie leurs références communes PR1 et PR2 sur la figure. Les électrodes PR1 et PR2 combinent d'une part des électrodes sous forme de rubans supportés par les portions 1 du résonateur, et d'autre part des électrodes du type « à trois pistes » supportées par la poutre sur la totalité de sa longueur. Les électrodes PR1 et PR2 sont reliées à des plages de connexions électriques (non représentées) communes aux premier et second modes de vibrations, lesdites plages de connexions communes étant reliées à deux boucles électroniques oscillatrices (non représentées) disposées en parallèle.

On voit sur la figure que les électrodes supportées par la poutre, en plus de leur fonction de mise en vibration du premier mode, jouent le rôle des rubans de raccordement R1a et R2a montrés à la figure 5A.

Le lecteur aura compris que le second exemple de réalisation présente, par rapport au premier exemple, l'avantage d'un couplage piézoélectrique plus important en ce qui concerne le premier mode de vibration (excitation sur toute la longueur de la poutre), et l'inconvénient d'une absence de sélectivité des électrodes vis-à-vis des deux modes. Il est possible de surmonter cet inconvénient en disposant au niveau de chacune des deux boucles électroniques oscillatrices un circuit électronique de filtrage suffisamment sélectif centré sur la fréquence du mode correspondant, soit 60 kHz pour le premier mode et 150 kHz pour le second mode dans l'exemple précité. Toutefois, par nature, un circuit électronique de filtrage induit une instabilité de phase du signal, notamment lors de variations de température, mais cette instabilité de phase est d'autant plus faible que le coefficient de qualité dé la vibration du mode est élevé.

En conclusion, le choix entre les deux exemples de réalisations montrés aux figures 5A et 5B ne doit pas être effectué a priori, mais nécessite de tenir compte de certains paramètres concernant le capteur et son domaine d'utilisation.

Il va maintenant être expliqué, en référence à la **figure 3B,** que la précision de la mesure de température délivrée par le résonateur 10 dépend étroitement de ses dimensions L1, L2, a et b, ainsi que de la diffusivité thermique du matériau, en l'occurrence dans l'exemple, du quartz. Ces paramètres conditionnent la «mise en température» du résonateur, et il est a priori facile d'appréhender que plus le résonateur est petit, plus la répartition de la température est uniforme dans le résonateur, et donc plus l'indication fournie par la fréquence du résonateur est représentative de la température du milieu de la poutre.

Les équations classiques de la conduction de la chaleur permettent de traduire le gradient de température dans le résonateur en exprimant l'écart $\varepsilon$ de température entre le milieu de la poutre et chacune des extrémités des parties massives 2 du résonateur :

$$\varepsilon \approx ( L1^2/(2.\kappa)).(1 + 2.b.L2/(a.L1) + L2^2/(4.L1^2) ).\partial T/\partial t$$

Où $\kappa$ est le coefficient de diffusivité thermique du matériau et T est la température du milieu dé la poutre pour reprendre la notation précédemment utilisée.

A titre d'exemple, si a = b ; L1 = L2 = 0,1 mm ;
$\kappa = 3,5.10^{-6}$ m$^2$/s (quartz) et $\partial T/\partial t$ = 10°C/mn, alors l'écart $\varepsilon$ de température dans le résonateur est de l'ordre de 10$^{-3}$ °C.

Cette valeur de 10$^{-3}$ °C est suffisamment faible pour que dans la pratique la température du résonateur reflète avec suffisamment de précision la température T du milieu dé la poutre, et que la vitesse de variation de la température du résonateur reflète avec suffisamment de précision la vitesse de variation ∂T/∂t de la température du milieu de la poutre.

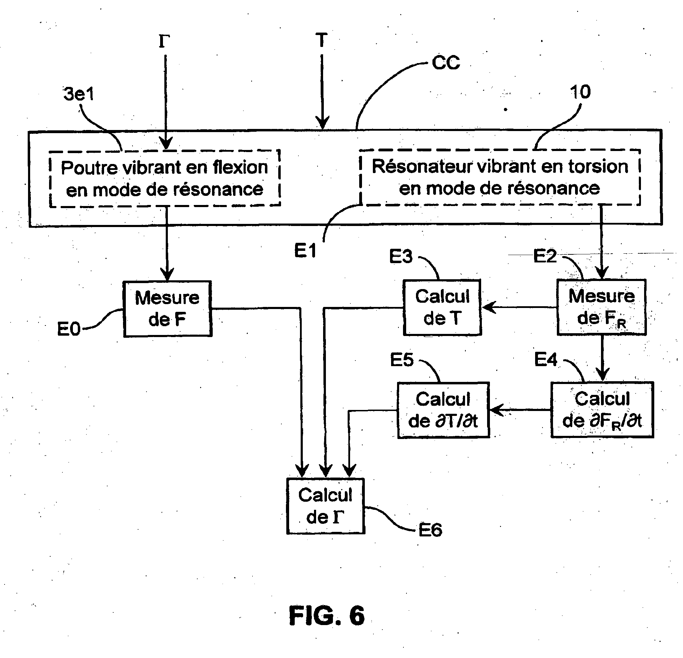

L'étalonnage de la fréquence F$_R$ du résonateur en fonction de la température T ayant été préalablement effectué, la température T du milieu de la poutre est déduite de chaque acquisition de la fréquence F$_R$ du résonateur, et sa vitesse de variation ∂T/∂t est déduite de l'incrément de fréquence entre deux acquisitions successives, ainsi qu'il est expliqué en référence à la figure 6 qui illustre le procédé de mise en oeuvre d'un dispositif selon l'invention.

Sur la **figure 6,** le cadre en pointillé référencé 3e1 symbolise la poutre vibrante d'une structure de capteur, et le cadre en pointillé référencé 10 symbolise le résonateur d'un dispositif selon l'invention, lesdits cadres en pointillé étant contenus dans le cadre CC symbolisant un capteur compensé en température grâce à la mise en oeuvre dudit dispositif selon l'invention.

La température agit sur l'ensemble du capteur CC. Grâce au positionnement du dispositif de l'invention directement sur la poutre vibrante (étape E1), la température T du résonateur 10 est sensiblement égale à la température du milieu de la poutre 3e1 et donc à la température moyenne de la poutre, ainsi qu'expliqué précédemment.

Par contre, la grandeur d'entrée, en l'occurrence l'accélération Γ, agit sur la poutre 3e1, mais n'agit pratiquement pas sur le résonateur 10 ainsi qu'expliqué précédemment.

Dans un mode préféré de mise en oeuvre du dispositif selon l'invention, l'acquisition de la fréquence F$_R$ du résonateur (étape E2) est effectuée simultanément avec celle de la fréquence F de la poutre vibrante de chaque structure de capteur (étape E0), à une cadence par exemple de 100Hz.

La température T est calculée directement à partir de la fréquence F$_R$ (étape E3), alors que le calcul de sa vitesse de variation ∂T/∂t (étape E5) nécessite deux acquisitions successives de la fréquence F$_R$ qui permettent de calculer une « dérivée partielle discrète » de F$_R$ par rapport au temps, ladite dérivée partielle discrète étant dans la pratique quasiment égale à la vitesse de variation ∂F$_R$/∂T (étape E4).

Les valeurs ainsi calculées de T et ∂T/∂t, et la valeur mesurée de F sont introduites dans l'expression du modèle analytique de F expliqué dans le préambule :

$$F \approx K_0 + K_1.\Gamma + K_2.\Gamma^2 + \alpha_1.(T-T_0) + \alpha_2.(T-T_0)^2 + \lambda.\partial T/\partial t$$

Cela permet ainsi de calculer (étape E6) une valeur de la grandeur d'entrée du capteur (soit l'accélération Γ dans l'exemple), très proche de la valeur vraie, puisque les effets des variations de température sur la fréquence de la poutre ont été quasiment compensés.

Le dispositif selon l'invention permettrait également d'envisager, si nécessaire d'améliorer encore l'efficacité de cette compensation en utilisant un modèle prenant également en compte des dérivés partielles d'ordre supérieur de la température par rapport au temps (∂$^2$T/∂t$^2$, etc...).

Dans le cas d'un capteur différentiel, il est nécessaire, pour tirer le meilleur parti de l'invention, que chacune des deux poutres vibrantes soit munie d'un dispositif selon l'invention, et que la compensation des effets de la température soit effectuée pour chacune des poutres selon le procédé de mise en oeuvre qui vient d'être décrit. Le procédé est alors utilisé pour compenser les effets de la température sur la fréquence de chacune des poutres.

Par ailleurs, l'intérêt du fonctionnement en mode différentiel du capteur subsiste, mais pour d'autres aspects que la température, par exemple pour linéariser la réponse du capteur à la grandeur d'entrée à mesurer.

**Revendications**

1. Dispositif de mesure de la température de la poutre (3e1), vibrant selon un mode de flexion, d'un capteur à poutre vibrante, comprenant un élément additionnel vibrant selon un autre mode et dont la fréquence de résonance en fonction de la température est connue, ladite fréquence de résonance étant sensiblement différente de celle de la poutre, **caractérisé en ce que** ledit élément est un résonateur (10) vibrant en torsion en mode de résonance et présentant un noeud (N) de vibration en torsion, ledit noeud étant sa zone de fixation au voisinage du milieu de la longueur (L3) de la poutre vibrante, ladite fixation permettant les transferts thermiques entre le résonateur et la poutre, ce grâce à quoi la fréquence du résonateur et les variations de cette fréquence sont représentatives respectivement de la température moyenne T de la poutre et des variations de cette température T.

2. Dispositif selon la revendication 1, **caractérisé en ce que** le résonateur a la forme générale d'un H dont les deux branches parallèles sont deux parties massives (2) sensiblement identiques disposées parallèlement à l'axe longitudinal de la poutre et de part et d'autre de la poutre, et dont la branche commune est constituée par deux portions (1) sensiblement identiques solidaires de la poutre et aptes à se déformer en torsion.

3. Dispositif selon l'une quelconque des revendications précédentes, **caractérisé en ce que** le résonateur et la poutre forment une structure monolithique plane d'épaisseur uniforme (c).

4. Dispositif selon l'une quelconque des revendications précédentes, **caractérisé en ce que** le résonateur est équipé de moyens de mise en vibration reliés à une boucle électronique oscillatrice permettant de maintenir la vibration de torsion du résonateur en mode de résonance.

5. Dispositif selon la revendication 4, **caractérisé en ce que** le résonateur et la poutre sont réalisés en cristal piézoélectrique, par exemple du quartz, et que les moyens de mise en vibration du résonateur sont sous la forme d'électrodes supportées par les portions du résonateur pilotées en torsion.

6. Dispositif selon la revendication 5, **caractérisé en ce que**, dans le cas où les moyens de mise en vibration de la poutre sont sous la forme d'électrodes (P1, P2) supportées par la poutre et reliées à une autre boucle électronique oscillatrice permettant de maintenir la vibration de flexion de la poutre en mode de résonance, les électrodes (RI, R2) du résonateur sont électriquement indépendantes des électrodes (P1, P2) de la poutre, ce qui permet que les boucles électroniques oscillatrices du résonateur et de la poutre travaillent indépendamment l'une de l'autre.

7. Dispositif selon la revendication 5, **caractérisé en ce que**, dans le cas où les moyens de mise en vibration de la poutre sont sous la forme d'électrodes supportées par la poutre et reliées à une autre boucle électronique oscillatrice permettant de maintenir la vibration de flexion de la poutre en mode de résonance, les électrodes (PR1, PR2) du résonateur et de la poutre sont électriquement reliées entre elles, ce qui permet d'exciter la poutre sur toute sa longueur.

8. Capteur à poutre vibrante comprenant un dispositif selon l'une quelconque des revendications précédentes pour améliorer la précision de mesure du capteur en compensant, par modèle, les effets de la température sur la fréquence de la poutre vibrante.

9. Capteur selon la revendication 8 **caractérisé en ce qu'**il est un capteur de type MEMS.

10. Procédé de mise en oeuvre d'un dispositif de mesure de la température de la poutre (3e1) vibrant en flexion d'un capteur à poutre vibrante, comprenant les étapes suivantes :

- Etape E1 : positionner un élément vibrant, (10), fonctionnant en mode de résonance grâce à un circuit électronique oscillant, dont la fréquence de résonance en fonction de la température est connue, de manière à ce que sa température soit représentative de la température moyenne T de la poutre vibrante (3e1);
- Etape E2 : mesurer la fréquence $F_R$ de vibration de l'élément vibrant (10) ;
- Etape E3 : estimer la température moyenne T de la poutre vibrante, à partir de la mesure de la fréquence $F_R$ de vibration dudit élément vibrant ;

**caractérisé en ce que** :

- Le positionnement dudit élément vibrant (10), qui vibre en torsion à une fréquence de résonance sensiblement différente de celle de la poutre et présente un noeud (N) de vibration en torsion, est réalisé de manière à ce que ledit élément soit fixé, au niveau dudit noeud, directement sur la poutre (3e1), au voisinage du milieu de sa longueur (L3), ladite fixation permettant les transferts thermiques entre l'élément vibrant et ladite poutre, ce grâce à quoi la température dudit élément et les variations même rapides de cette température, sont très sensiblement égales respectivement à la température moyenne T de ladite poutre et aux variations même rapides de cette température T;
- ledit procédé comprend eh outre les étapes suivantes :

  o Etape E4 : estimer, à partir d'au moins deux mesures successives de la fréquence $F_R$ de vibration en torsion de l'élément vibrant, la variation dans le temps de ladite fréquence $F_R$;
  o Etape E5 : estimer la variation dans le temps de la température moyenne de la poutre vibrante, à partir de l'estimation de la variation dans le temps de ladite fréquence $F_R$ ;

**11.** Procédé selon la revendication 10, **caractérisé en ce qu'**il comprend en outre les étapes suivantes :

- Etape E0: mesurer la fréquence F de la poutre vibrante (3e1);
- Etape E6 : estimer la grandeur d'entrée à mesurer par le capteur en compensant, par modèle, les effets de la température et de sa variation sur le fonctionnement dudit capteur, de manière à obtenir une estimation plus précise de cette grandeur d'entrée, ladite compensation étant réalisée à partir d'une part des estimations de la température moyenne T de la poutre vibrante, de l'estimation de sa variation dans le temps, de la mesure de la fréquence F de vibration de la poutre, et d'autre part d'un modèle exprimant ladite fréquence F en fonction de ladite grandeur d'entrée, de la température T et de la variation dans le temps de T.

**12.** Procédé selon la revendication 11, **caractérisé en ce que** la mesure de la fréquence $F_R$ de l'élément vibrant (étape E2) est effectuée simultanément avec celle de la fréquence F de la poutre (étape E0).

**13.** Procédé selon la revendication 11 ou 12, **caractérisé en ce que**, dans le cas où ledit capteur à poutre vibrante est un capteur différentiel comportant deux poutres vibrantes munies chacune d'un dispositif de mesure de la température selon l'invention, ledit procédé est utilisé pour compenser les effets de la température sur la fréquence de chacune des poutres.

**Patentansprüche**

**1.** Vorrichtung zum Messen der Temperatur des gemäß einem Biegemodus schwingenden Stabs (3e1) eines Schwingstabsensors, ein zusätzliches Element umfassend, das gemäß einem anderen Modus schwingt, und dessen temperaturabhängige Resonanzfrequenz bekannt ist, wobei sich die Resonanzfrequenz im Wesentlichen von derjenigen des Stabs unterscheidet, **dadurch gekennzeichnet, dass** das Element ein Resonator (10) ist, der in einem Resonanztorsionsmodus schwingt und einen Torsionsschwingungsknoten (N) aufweist, wobei der Knoten dessen Befestigungsbereich im Nahbereich der Mitte der Länge (L3) des Schwingstabs ist, wobei die Befestigung Wärmeübertragungen zwischen dem Resonator und dem Stab zulässt, wodurch die Frequenz des Resonators und die Veränderungen dieser Frequenz für die mittlere Temperatur T des Stabs bzw. die Veränderungen dieser Temperatur T repräsentativ sind.

**2.** Vorrichtung nach Anspruch 1, **dadurch gekennzeichnet, dass** der Resonator die allgemeine Form eines H hat, dessen zwei parallele Schenkel zwei im Wesentlichen identische massive Teile (2) sind, die parallel zur Längsachse des Stabs und beidseits des Stabs angeordnet sind, und dessen gemeinsamer Schenkel aus zwei im Wesentlichen identischen Abschnitten (1) besteht, die fest mit dem Stab verbunden sind und sich unter Torsion verformen können.

**3.** Vorrichtung nach einem der vorhergehenden Ansprüche, **dadurch gekennzeichnet, dass** der Resonator und der Stab eine ebene monolithische Struktur mit gleichmäßiger Dicke (c) bilden.

**4.** Vorrichtung nach einem der vorhergehenden Ansprüche, **dadurch gekennzeichnet, dass** der Resonator mit Einrichtungen zur Schwingungsanregung ausgestattet ist, die mit einem elektronischen Schwingkreis verbunden sind, der es ermöglicht, die Torsionsschwingung des Resonators im Resonanzmodus zu halten.

**5.** Vorrichtung nach Anspruch 4, **dadurch gekennzeichnet, dass** der Resonator und der Stab aus piezoelektrischem Kristall, beispielsweise Quarz, hergestellt sind, und dass die Einrichtungen zur Schwingungsanregung des Resonators in Form von Elektroden vorliegen, die von den torsionsgesteuerten Abschnitten des Resonators getragen sind.

**6.** Vorrichtung nach Anspruch 5, **dadurch gekennzeichnet, dass** in dem Fall, in dem die Einrichtungen zur Schwingungsanregung des Stabs in Form von Elektroden (P1, P2) vorliegen, die vom Stab getragen und mit einem anderen elektronischen Schwingkreis verbunden sind, der es ermöglicht, die Biegeschwingung des Stabs im Resonanzmodus zu halten, die Elektroden (R1, R2) des Resonators von den Elektroden (P1, P2) des Stabs elektrisch unabhängig sind, was es ermöglicht, dass die elektronischen Schwingkreise des Resonators und des Stabs unabhängig voneinander arbeiten.

**7.** Vorrichtung nach Anspruch 5, **dadurch gekennzeichnet, dass** in dem Fall, in dem die Einrichtungen zur Schwingungsanregung des Stabs in Form von Elektroden vorliegen, die vom Stab getragen und mit einem anderen elektronischen Schwingkreis verbunden sind, der es ermöglicht, die Biegeschwingung des Stabs im Resonanzmodus zu halten, die Elektroden (PR1, PR2) des Resonators und des Stabs elektrisch miteinander verbunden sind, was es ermöglicht, den Stab über seine gesamte Länge anzuregen.

8. Schwingstabsensor, der eine Vorrichtung nach einem der vorhergehenden Ansprüche umfasst, um die Messgenauigkeit des Sensors zu verbessern, indem anhand eines Modells die Auswirkungen der Temperatur auf die Frequenz des Schwingstabs kompensiert werden.

9. Sensor nach Anspruch 8, **dadurch gekennzeichnet, dass** er ein Sensor des Typs MEMS ist.

10. Verfahren zur Bereitstellung einer Vorrichtung zum Messen der Temperatur des biegungsschwingenden Stabs (3e1) eines Schwingstabsensors, die folgenden Schritte umfassend:

- Schritt E1: Anordnen eines Schwingungselements (10), das aufgrund eines elektronischen Schwingkreises im Resonanzmodus arbeitet, dessen temperaturabhängige Resonanzfrequenz bekannt ist, so, dass seine Temperatur für die mittlere Temperatur T des Schwingstabs (3e1) repräsentativ ist;
- Schritt E2: Messen der Schwingungsfrequenz $F_R$ des Schwingungselements (10);
- Schritt E3: Schätzen der mittleren Temperatur T des Schwingstabs ausgehend vom Messwert der Schwingungsfrequenz $F_R$ des Schwingungselements;

**dadurch gekennzeichnet, dass**:

- das Anordnen des Schwingungselements (10), das bei einer Resonanzfrequenz unter Torsion schwingt, die sich im Wesentlichen von derjenigen des Stabs unterscheidet, und das einen Torsionsschwingungsknoten (N) aufweist, so ausgeführt wird, dass das Element auf Höhe des Knotens im Nahbereich der Mitte seiner Länge (L3) direkt am Stab (3e1) befestigt wird, wobei die Befestigung Wärmeübertragungen zwischen dem Schwingungselement und dem Stab zulässt, wodurch die Temperatur des Elements und die selbst schnellen Veränderungen dieser Temperatur im Wesentlichen der mittleren Temperatur T des Stabs bzw. den selbst schnellen Veränderungen dieser Temperatur T sehr gleich sind;
- wobei das Verfahren darüber hinaus die folgenden Schritte umfasst.

    o Schritt E4: Messen, und zwar ausgehend von mindestens zwei sukzessiven Messungen der Torsionsschwingungs-frequenz $F_R$ des Schwingungselements, der zeitlichen Veränderung der Frequenz $F_R$;
    o Schritt E5: Schätzen der zeitlichen Veränderung der mittleren Temperatur des Schwingstabs ausgehend vom Schätzwert der zeitlichen Veränderung der Frequenz $F_R$.

11. Verfahren nach Anspruch 10, **dadurch gekennzeichnet, dass** es darüber hinaus die folgenden Schritte umfasst:

- Schritt E0: Messen der Frequenz F des Schwingstabs (3e1);
- Schritt E6: Schätzen der durch den Sensor zu messenden Eingangsgröße, indem anhand eines Modells die Auswirkungen der Temperatur und ihrer Veränderung auf den Funktionsablauf des Sensors kompensiert werden, um einen genaueren Schätzwert dieser Eingangsgröße zu erhalten, wobei die Kompensation ausgehend einerseits von Schätzwerten der mittleren Temperatur T des Schwingstabs, des Schätzwerts ihrer zeitlichen Veränderung, des Messwerts der Schwingungsfrequenz F des Stabs, und andererseits eines Modells erfolgt, das die Frequenz F in Abhängigkeit von der Eingangsgröße, der Temperatur T und der zeitlichen Veränderung von T ausdrückt.

12. Verfahren nach Anspruch 11, **dadurch gekennzeichnet, dass** die Messung der Frequenz $F_R$ des Schwingungselements (Schritt E2) gleichzeitig mit derjenigen der Frequenz F des Stabs (Schritt E0) durchgeführt wird.

13. Verfahren nach Anspruch 11 oder 12, **dadurch gekennzeichnet, dass** in dem Fall, in dem der Schwingstabsensor ein Differentialsensor ist, der zwei Schwingstäbe umfasst, wovon jeder mit einer erfindungsgemäßen Vorrichtung zum Messen der Temperatur ausgestattet ist, das Verfahren dazu genutzt wird, die Auswirkungen der Temperatur auf die Frequenz jedes der Stäbe zu kompensieren.

**Claims**

1. Device for measuring the temperature of the beam (3e1), vibrating according to a flexural mode, of a vibrating beam sensor, comprising an additional element that vibrates according to a different mode and the resonance frequency of which, as a function of the temperature, is known, said resonance frequency being substantially different from that of the beam,

**characterised in that** said element is a resonator (10) vibrating torsionally in resonance mode and having a torsional vibration node (N), said node being its zone of fixing in the vicinity of the middle of the length (L3) of the vibrating beam, said fixing allowing heat transfers between the resonator and the beam, by virtue of which the frequency of the resonator and the variations **in that** frequency are representative of the mean temperature T of the beam and of the variations **in that** temperature T, respectively.

2. Device according to claim 1, **characterised in that** the resonator has the general shape of an H, the two parallel limbs of which are two substantially identical solid parts (2) arranged parallel to the longitudinal axis of the beam and on either side of the beam, and the common limb of which is constituted by two substantially identical portions (1) integral with the beam and capable of torsional deformation.

3. Device according to any one of the preceding claims, **characterised in that** the resonator and the beam form a planar monolithic structure of uniform thickness (c).

4. Device according to any one of the preceding claims, **characterised in that** the resonator is equipped with vibration-inducing means connected to an oscillating electronic loop allowing the torsional vibration of the resonator in resonance mode to be maintained.

5. Device according to claim 4, **characterised in that** the resonator and the beam are made of piezoelectric crystal, for example quartz, and **in that** the vibration-inducing means of the resonator are in the form of electrodes carried by the torsionally controlled portions of the resonator.

6. Device according to claim 5, **characterised in that**, in the case where the vibration-inducing means of the beam are in the form of electrodes (P1, P2) carried by the beam and connected to a different oscillating electronic loop allowing the flexural vibration of the beam in resonance mode to be maintained, the electrodes (R1, R2) of the resonator are electrically independent of the electrodes (P1, P2) of the beam, which allows the oscillating electronic loops of the resonator and of the beam to work independently of one another.

7. Device according to claim 5, **characterised in that**, in the case where the vibration-inducing means of the beam are in the form of electrodes carried by the beam and connected to a different oscillating electronic loop allowing the flexural vibration of the beam in resonance mode to be maintained, the electrodes (PR1, PR2) of the resonator and of the beam are electrically connected, which allows the beam to be excited over its entire length.

8. Vibrating beam sensor comprising a device according to any one of the preceding claims to improve the precision of measurement of the sensor by compensating, by a model, the effects of temperature on the frequency of the vibrating beam.

9. Sensor according to claim 8, **characterised in that** it is a sensor of the MEMS type.

10. Method of using a device for measuring the temperature of the flexurally vibrating beam (3e1) of a vibrating beam sensor, comprising the following steps:

   ▪ Step E1: positioning a vibrating element (10) operating in resonance mode by virtue of an oscillating electronic circuit, the resonance frequency of which as a function of the temperature is known, in such a manner that its temperature is representative of the mean temperature T of the vibrating beam (3e1);
   ▪ Step E2: measuring the frequency of vibration $F_R$ of the vibrating element (10);
   ▪ Step E3: evaluating the mean temperature T of the vibrating beam on the basis of the measurement of the frequency of vibration $F_R$ of said vibrating element;

   **characterised in that**:

   ▪ the positioning of said vibrating element (10), which vibrates torsionally at a resonance frequency substantially different from that of the beam and has a torsional vibration node (N), is carried out in such a manner that said element is fixed, in the region of said node, directly to the beam (3e1), in the vicinity of the middle of its length (L3), said fixing permitting heat transfers between the vibrating element and said beam, by virtue of which the temperature of said element and the variations, even rapid variations, of that temperature are very substantially equal to the mean temperature T of said beam and to the variations, even rapid variations, of that temperature T, respectively;

- said method further comprises the following steps:

  o Step E4: evaluating, on the basis of at least two successive measurements of the torsional vibration frequency $F_R$ of the vibrating element, the variation over time of said frequency $F_R$;
  o Step E5: evaluating the variation over time of the mean temperature of the vibrating beam, on the basis of the evaluation of the variation over time of said frequency $F_R$.

11. Method according to claim 10, **characterised in that** it further comprises the following steps:

- Step E0: measuring the frequency F of the vibrating beam (3e1);
- Step E6: evaluating the input quantity to be measured by the sensor by compensating, by a model, the effects of the temperature and its variation on the operation of said sensor, so as to obtain a more precise evaluation of that input quantity, said compensation being made on the basis on the one hand of the evaluations of the mean temperature T of the vibrating beam, the evaluation of its variation over time, the measurement of the frequency F of vibration of the beam, and on the other hand of a model expressing said frequency F as a function of said input quantity, of the temperature T and of the variation over time of T.

12. Method according to claim 11, **characterised in that** the measurement of the frequency $F_R$ of the vibrating element (step E2) is carried out simultaneously with the measurement of the frequency F of the beam (step E0).

13. Method according to claim 11 or 12, **characterised in that**, in the case where said vibrating beam sensor is a differential sensor having two vibrating beams each equipped with a temperature measuring device according to the invention, said method is used to compensate the effects of the temperature on the frequency of each of the beams.

# FIG. 1
## (TECHNIQUE ANTERIEURE)

**FIG. 2**
(TECHNIQUE
ANTERIEURE)

**FIG. 3A**

**FIG. 3B**

**FIG. 4A**

**FIG. 4B**

**FIG. 5A**

**FIG. 5B**

**FIG. 6**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5962786 A
- US 4879944 A
- US 5315874 A

**Littérature non-brevet citée dans la description**

- **BRIAN L. NORLING.** Précision gravity measurement utilizing Accelerex vibrating beam accelerometer technology. *IEEE PLANS,* 1990
- **ROBERT G. AZEVEDO.** Dual-mode temperature compensation for a comb-driven MEMS resonant strain gauge. *Sensors and Actuators A: Physical,* 2008